# FASCICULE DE BREVET EUROPEEN

(11) **EP 2 773 677 B1**
(45) Date de publication et mention de la délivrance du brevet: **25.11.2015**
(21) Numéro de dépôt: 12781395.4
(22) Date de dépôt: 15.10.2012
(51) Int. Cl.: C08F 2/24, C08L 33/02, C08L 33/08, C08L 33/14, C09D 7/12, C09J 11/08

(54) **EMULSION D'UN POLYMERE ACRYLIQUE ASSOCIATIF POLYMERISE EN PRESENCE DE POLYGLYCEROLS ET SON UTILISATION COMME AGENT EPAISSISSANT DANS UNE FORMULATION AQUEUSE**
EMULSION EINES IN GEGENWART VON POLYGLYCERINEN POLYMERISIERTEN ASSOZIATIVEN ACRYLPOLYMERS UND SEINE VERWENDUNG ALS VERDICKUNGSMITTEL IN EINER WÄSSRIGEN ZUSAMMENSETZUNG
EMULSION OF AN ASSOCIATIVE ACRYLIC POLYMER POLYMERIZED IN THE PRESENCE OF POLYGLYCEROLS AND USE OF SAME AS A THICKENING AGENT IN AN AQUEOUS COMPOSITION

(30) Priorité: 04.11.2011 FR 1160010
(43) Date de publication de la demande: 10.09.2014
(73) Titulaire: COATEX, 69730 Genay (FR)
(72) Inventeur: SUAU, Jean-Marc, F-69480 Lucenay (FR); RUHLMANN, Denis, F-69730 Genay (FR)
(74) Mandataire: Fiorucci, Hélène
(86) Numéro de dépôt international: PCT/FR2012/052341
(87) Numéro de publication internationale: WO 2013/064763

(56) Documents cités:
- DE-A1-102007 039 783

## Description

La présente invention se rapporte à de nouvelles émulsions contenant des épaississants associatifs acryliques qui, polymérisés en présence de polyglycérols particuliers, présentent un pouvoir épaississant remarquablement stable au cours du temps. On réduit ainsi notablement la dérive viscosimétrique qu'engendre ce type d'épaississants, en, particulier dans les peintures à faible taux de COV (Composés Organiques Volatiles) ou sans COV, qui apparaît très rapidement au bout de quelques jours de stockage. On garantit ainsi à l'utilisateur des propriétés applicatives identiques pour sa peinture, c'est-à-dire un profil rhéologique conservé pour la peinture qu'il formule et qu'il applique, indépendamment du temps de stockage de ladite peinture, et ce, sur une période pouvant atteindre plusieurs mois.

Maîtriser la rhéologie d'une peinture, tant au stade de sa fabrication, que pendant son transport, son stockage ou sa mise en oeuvre reste aujourd'hui une priorité. La diversité des contraintes observées au niveau de chacune de ces étapes renvoie à une multiplicité de comportements rhéologiques différents. On peut néanmoins résumer le besoin de l'homme du métier à l'obtention d'un effet d'épaississement de ladite peinture, tant pour des raisons de stabilité au cours du temps, que pour une possible application sur une surface verticale, l'absence d'éclaboussure au moment de la mise en oeuvre, ou de coulure par la suite, etc... De fait, on a désigné les produits qui contribuent à cette régulation du comportement rhéologique sous le terme d'épaississants.

Historiquement, on a utilisé dès les années 1950 des gommes et des produits à base cellulosique, dont une des caractéristiques essentielles est leur poids moléculaire élevé.

Ces composés présentent cependant un certain nombre d'inconvénients tels que leur instabilité au cours du temps (voir le document US 4 673 518), la nécessité d'en utiliser une quantité importante (voir le document EP 0 250 943 A1), ou leur coût de production, notamment au niveau du traitement des déchets (voir le document US 4 384 096).

Ont ensuite vu le jour les épaississants dits « associatifs » : ce sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu. Leur mécanisme de fonctionnement et leurs caractéristiques sont désormais bien connus et décrits par exemple dans les documents « Rheology modifiers for water-bome paints » (Surface Coatings Australia, 1985, pp. 6-10) et «Rheological modifiers for water-based paints : the most flexible tools for your formulations » (Eurocoat 97, UATCM, vol. 1, pp 423-442).

Parmi ces épaississants associatifs, on connaît une plate-forme technologique regroupant des émulsions particulières dites « HASE » (Emulsions modifiées hydrophobiquement et épaississantes en milieu alcalin ou Hydrophobically modified Alkali-soluble Emulsions). Ces dernières contiennent des polymères de l'acide (méth)acrylique, d'un ester de ces acides et d'un monomère associatif constitué d'une chaîne oxyalkylée terminée par un groupement hydrophobe.

Pour ces monomères associatifs, le choix du groupement hydrophobe est à l'origine de propriétés rhéologiques variées. On peut citer à cet égard les demandes de brevet suivantes déposées par Coatex™ : EP 0 577 526 A1 qui décrit une chaîne grasse avec des groupes linéaires ou ramifiés du type alkyle et/ou aryle ayant de 26 à 30 atomes de carbone, pour développer de hautes viscosités sous bas gradient de cisaillement, et EP 1 778 797 A1 qui décrit une chaîne terminale ramifiée comportant de 10 à 24 atomes de carbone, pour améliorer la compatibilité pigmentaire et augmenter la viscosité de manière générale.

Néanmoins, les épaississants associatifs -et notamment les HASE- ont tendance à procurer des viscosités pouvant augmenter au cours du temps de stockage, dès l'instant où ils sont introduits dans une peinture. Il est en effet bien connu que le pouvoir épaississant qu'ils développent a tendance à augmenter avec le temps, lorsqu'ils sont associés dans la peinture à des liants ne nécessitant pas ou peu d'agents d'aide à la coalescence : cette tendance est généralement observable dès 8 jours après formulation.

Une telle dérive n'est pas souhaitable, car elle est synonyme d'une perte de contrôle du profil rhéologique de la peinture.

Or, la Demanderesse a mis au point un nouveau procédé de fabrication d'émulsions aqueuses contenant des épaississants de type HASE, faisant intervenir des polyglycérols particuliers. Les produits résultant développent des viscosités tout à fait stables au sein des formulations de peinture dans lesquelles ils sont incorporés : on dispose ainsi d'une solution simple et efficace au problème de dérive rhéologique tel qu'évoqué plus haut.

Une des caractéristiques des polyglycérols dont il est question, outre leur nature chimique, repose sur le fait qu'ils sont utilisés pendant la synthèse des épaississants de type HASE : en ce sens, il s'agit de « tensio-actifs de polymérisation ». Par opposition, des « tensio-actifs de formulation » sont utilisés après la polymérisation des épaississants, notamment pour mettre en oeuvre dans l'eau le produit fini obtenu après polymérisation.

La Demanderesse indique que la mise en oeuvre de tensio-actifs au cours de la polymérisation d'un épaississant associatif acrylique est déjà connue : elle est notamment décrite dans le document WO 2009 019225 A1. Par ailleurs, il est aussi déjà connu d'utiliser du glycérol pendant le même type de synthèse, comme divulgué dans le document WO 98 06757 A1. Néanmoins, rien ne décrivait ni ne suggérait que la mise en oeuvre de polyglycérols, comme tensio-actifs de polymérisation, était susceptible de conduire à de nouvelles émulsions aqueuses contenant des épaississants associatifs de type HASE, conférant aux peintures dans lesquelles ils sont introduits des viscosités particulièrement stables.

Aussi, un premier objet de l'invention consiste-t-il en une émulsion aqueuse d'un épaississant associatif obtenu par polymérisation :
a) d'au moins un monomère qui est l'acide (méth)acrylique, préférentiellement l'acide méthacrylique,
b) d'au moins un monomère qui est un ester de l'acide (méth)acrylique, préférentiellement l'acrylate d'éthyle,
c) d'au moins un monomère possédant au moins un groupement hydrophobe, caractérisée en ce qu'on met en oeuvre d) au moins un polyglycérol de formule (I) pendant ladite polymérisation 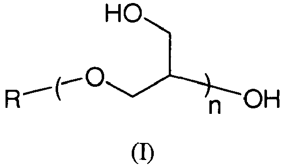 où R désigne l'hydrogène, un groupement ester fonctionnalisé par un groupe alkyle ayant de 8 à 22 atomes de carbone ou un groupement alkyle ayant de 8 à 22 atomes de carbone, et préférentiellement un groupement alkyle ayant de 8 à 22 atomes de carbone.

Cette émulsion est aussi caractérisée en ce que, pour ledit épaississant associatif obtenu par polymérisation, ladite polymérisation consiste à réaliser une première étape d'introduction dans l'eau des composés d) et desdits tensio-actifs autres que les composés d), suivie d'une deuxième étape de montée en température du milieu, suivie d'une troisième étape d'introduction des initiateurs de polymérisation, puis des monomères éventuellement ajoutés en combinaison avec de l'eau et des tensio-actifs autres que les composés d).

Cette émulsion est aussi caractérisée en ce que, pour ledit épaississant associatif obtenu par polymérisation, dans ladite polymérisation les tensio-actifs autres que les composés d) sont choisis parmi les tensio-actifs anioniques et préférentiellement parmi le dodécyl sulfate de sodium, le di octyl sulfosuccinate de sodium, le dodécyl benzène sulfonate de sodium, les tensio-actifs non ioniques et préférentiellement les éthers d'alcools gras et de polyoxyéthylèneglycol, les esters de polyoxyéthylèneglycol et les mélanges de ces tensio-actifs.

Cette émulsion est aussi caractérisée en ce que, pour ledit épaississant associatif obtenu par polymérisation, le % massique de tensio-actifs autres que d) / polymère est compris entre 1 % et 5 % dans ladite polymérisation.

Cette émulsion est aussi caractérisée en ce que, pour ledit épaississant associatif obtenu par polymérisation, ladite polymérisation met en oeuvre, en % en poids, par rapport au poids total dudit épaississant associatif :
a) de 20 % à 60 % en poids d'au moins un monomère qui est l'acide (méth)acrylique, préférentiellement l'acide méthacrylique,
b) de 40 % à 80 % d'au moins un monomère qui est un ester de l'acide (méth)acrylique, préférentiellement l'acrylate d'éthyle,
c) de 0,5 % à 25 % d'au moins un monomère possédant au moins un groupement hydrophobe,
d) de 0,1 % à 10 % en poids d'au moins un polyglycérol de formule (I), 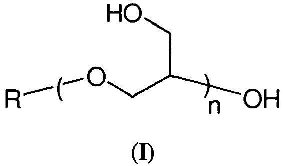
   où R désigne l'hydrogène, un groupement ester fonctionnalisé par un groupe alkyle ayant de 8 à 22 atomes de carbone ou un groupement alkyle ayant de 8 à 22 atomes de carbone, et préférentiellement un groupement alkyle ayant de 8 à 22 atomes de carbone,
   la somme des pourcentages a), b), c) et d) étant égale à 100 %.

Cette émulsion est aussi caractérisée en ce que, pour ledit épaississant associatif obtenu par polymérisation, le monomère contenant au moins un groupement hydrophobe possède la formule générale R - (OE)ₚ - (OP)_{q} - R', avec :
- p et q désignant des entiers inférieurs ou égaux à 150 dont l'un au moins est non nul, avec préférentiellement q = 0 et 0 < p < 80,
- OE et OP désignant respectivement l'oxyde d'éthylène et l'oxyde de propylène, disposés de manière aléatoire ou de manière régulière,
- R désignant une fonction polymérisable, et préférentiellement la fonction méthacrylate ou méthacryluréthane,
- R' désignant un groupement hydrophobe comportant au moins 6 et au plus 36 atomes de carbone.

Cette émulsion est aussi caractérisée en ce que, pour ledit polymère associatif obtenu par polymérisation, il présente une masse moléculaire moyenne en poids comprise entre 20 000 g/mol et 1 000 000 g/mol, telle que mesurée par GPC.

Un autre objet de la présente invention consiste en l'utilisation d'une telle émulsion, comme agent épaississant d'une formulation aqueuse ou d'un adhésif, ladite formulation aqueuse étant préférentiellement une peinture aqueuse, un crépi ou un enduit.

Un autre objet de la présente invention réside dans la formulation aqueuse ou l'adhésif contenant ladite émulsion, ladite formulation aqueuse étant préférentiellement une peinture aqueuse, un crépi ou un enduit.

Un dernier objet de la présente invention concerne l'utilisation du polyglycérol de formule (I) comme monomère pour préparer par polymérisation un épaississant associatif sous forme d'émulsion aqueuse.

Les exemples qui suivent permettent de mieux appréhender la présente invention, sans pourtant en limiter la portée.

### EXEMPLES

Dans chacun des exemples suivants, la masse moléculaire des épaississants associatifs est déterminée par GPC.

La synthèse desdits épaississants est bien connue de l'homme du métier, et on pourra notamment se reporter aux différents documents cités dans la Demande comme arrière-plan sur la technologie des HASE.

Les peintures sont formulées selon les méthodes bien connues de l'homme du métier. Toutes les viscosités Brookfïeld™ des formulations de peinture sont déterminées à 25°C.

### Exemple 1

Cet exemple illustre la synthèse et l'utilisation de différents épaississants associatifs, selon l'invention (présence de polyglycérol au cours de la synthèse), ou hors invention (sans additif, avec du glycérol mis en oeuvre pendant la synthèse ou comme agent de formulation, avec du polyglycérol ajouté comme tensio-actif de formulation).

L'utilisation en question a lieu dans une formulation de peinture aqueuse dont la constitution est donnée dans le tableau 1, les chiffres indiquant la masse en gramme de chaque constituant.

**Tableau 1**

| | |
|---|---|
| Eau | 294,0 |
| Ammoniaque 31% | 2,0 |
| Ecodis 40 (Coatex™) | 3,0 |
| Acticide MBS (Thor™) | 2,0 |
| Byk™ 34 (Byk™) | 1,0 |
| TiONA™ 568 (Cristal™) | 41,0 |
| Durcal 5 (Omya™) | 328,0 |
| Omyacoat™ 850 OG (Omya™) | 215,0 |
| Axilat™ DS 910 (Hexion™) | 82,0 |
| Butyl diglycol | 20,0 |
| Epaississant à tester | 12,0 * |

| | |
|---|---|
| * les 12 grammes correspondent à la masse d'une émulsion contenant 30 % en poids sec de polymère (à l'exception de l'essai n° 4 qui met en oeuvre 3,0 grammes en poids sec d'un épaississant commercial sous forme de poudre) | |

### Essai n° 1

Cet essai illustre un épaississant HASE hors invention, polymérisé avec un tensio-actif classique.

Cet épaississant résulte de la synthèse de, exprimé en % en poids des monomères :
a) 37,4 % d'acide méthacrylique,
b) 54,3 % d'acrylate d'éthyle,
c) 8,3 % d'un monomère de formule (I) avec :
   R désignant la fonction méthacrylate,
   q = 0, p = 25,
   R' désignant le groupement hydrophobe issu de l'alcool oxo ayant 16 atomes de carbone.

Dans un réacteur de 1 litre on pèse 485,4 grammes d'eau bi permutée et 6,66 grammes de dodécyl sulfate de sodium et 11,5 g de tensio-actif non ionique qui est l'alcool isotridécylique condensé avec 3 molécules d'oxyde d'éthylène. On chauffe en pied de cuve à 72°C ± 2°C.

Pendant ce temps, on prépare une pré émulsion, en pesant dans un bécher :
- 149 grammes d'eau bi permutée,
- 2,33 grammes de dodécyl sulfate de sodium,
- 111,33 grammes d'acide méthacrylique,
- 161,45 grammes d'acrylate d'éthyle,
- 24,6 grammes de macromonomère de formule (I).

La masse de tensio-actif non-ionique représente donc ici 3,8 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 2

Cet essai illustre un épaississant HASE hors invention, polymérisé avec un tensio-actif classique.

Il s'agit du même épaississant que celui de l'essai n° 1, dans lequel on a remplacé, en masse, le tensio-actif non-ionique par du nonyl phénol condensé avec 4 molécules d'oxyde d'éthylène.

### Essai n° 3

Cet essai illustre un épaississant HASE hors invention, polymérisé avec un tensio-actif classique.

Il s'agit du même épaississant que celui de l'essai n° 1, dans lequel on a remplacé, en masse, le tensio-actif non-ionique par un tensio-actif commercialisé par la société Clariant™ sous le nom de Polyglykol™ B11/150.

### Essai n° 4

Cet essai illustre un épaississant hors invention, formulé dans l'eau avec introduction de glycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec de glycérol provenant de la société Oleon™ par rapport au poids sec de polymère.

### Essai n° 5

Cet essai illustre un épaississant hors invention, formulé dans l'eau avec introduction de polyglycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec, par rapport au poids sec de polymère, de polyglycérol-3 de formule (I) avec R = H, et n = 3 commercialisé par la société Solvay™.

### Essai n° 6

Cet essai illustre un épaississant hors invention, formulé dans l'eau avec introduction de polyglycérol après polymérisation.

L'épaississant est celui de l'essai n° 1, polymérisé selon la technique décrite dans l'essai n° 1.

Dans la solution finale à 30 % en poids sec de matière active, on introduit 3 % en poids sec, par rapport au poids sec de polymère, de polyglycérol hydrophobé qui est le Chimexane™ NB de formule (I) avec R = C₁₈H₃₅ et n = 2 commercialisé par la société Chimex™.

### Essai n° 7

Cet essai illustre un épaississant hors invention, polymérisé en présence de glycérol. L'épaississant est celui de l'essai n° 1, polymérisé selon la technique décrite dans l'essai n° 1, à la différence qu'on a substitué, en masse, le tensio-actif non-ionique de polymérisation par du glycérol provenant de la société Oleon™.

### Essai n° 8

Cet essai illustre un épaississant selon l'invention, polymérisé en présence du polyglycérol-3, qui est celui mis en oeuvre au cours de l'essai n° 6.

L'épaississant est celui de l'essai n° 1, polymérisé selon la technique décrite dans l'essai n° 1, à la différence qu'on a substitué, en masse, le tensio-actif non-ionique de polymérisation par le polyglycérol-3 de l'essai n° 5.

### Essai n° 9

Cet essai illustre un épaississant selon l'invention, polymérisé en présence du Chimexane™ NB, qui est celui mis en oeuvre au cours de l'essai n° 6.

L'épaississant est celui de l'essai n° 1, polymérisé selon la technique décrite dans l'essai n° 1, à la différence qu'on a substitué, en masse, le tensio-actif non-ionique de polymérisation par le Chimexane™ NB de l'essai n° 6.

Pour chacun des essais, on a déterminé les viscosités Brookfield™, à 25°C, à 10 et 100 tours / min, aux instants t = 1 jour (µ_{10 1J}, µ_{100 1J}) et t = 7 jours (µ_{10 7J}, µ_{100 7J}), l'instant t = 0 correspondant au moment de la fabrication de la peinture.

Les résultats apparaissent dans le tableau 2.

**Tableau 2**

| Essai n° | 1 | 2 | 3 | 4 | 5 |
|---|---|---|---|---|---|
| Hors Invention INvention | HI | HI | HI | HI | HI |
| µ_{10 1J} (mPa.s) | 6600 | 6500 | 6800 | 5600 | 6200 |
| µ_{100 1J} (mPa.s) | 2600 | 2700 | 2800 | 2200 | 2700 |
| µ_{10 7J} (mPa.s) | 7500 | 7700 | 7850 | 5900 | 6400 |
| µ_{100 7J} (mPa.s) | 3300 | 3450 | 3600 | 2650 | 3100 |
| Δµ₁₀ (%) | 12 | 16 | 13 | 5 | 3 |
| Δµ₁₀₀ (%) | 21 | 22 | 22 | 10 | 13 |
| | | | | | |

| Essai n° | | 6 | 7 | 8 | 9 |
|---|---|---|---|---|---|
| Hors Invention INvention | | HI | HI | IN | IN |
| µ_{10 1J} (mPa.s) | | 6400 | 9100 | 10500 | 5000 |
| µ_{100 1J} (mPa.s) | | 2800 | 3600 | 3800 | 2100 |
| µ_{10 7J} (mPa.s) | | 6750 | 10600 | 10800 | 5050 |
| µ_{100 7J} (mPa.s) | | 3150 | 4900 | 3900 | 2100 |
| Δµ₁₀ (%) | | 5 | 14 | 3 | 1 |
| Δµ₁₀₀ (%) | | 13 | 27 | 3 | 0 |

Ces résultats démontrent que seuls les épaississants polymérisés en présence de polyglycérols selon l'invention, permettent de limiter l'évolution de la viscosité de la peinture au bout de 7 jours.

On parvient même, avec l'essai n° 9 qui représente la variante préférentielle de l'invention, à stabiliser quasi-parfaitement la viscosité de la peinture une semaine après sa fabrication.

Pour ce dernier essai, les mesures de viscosités Brookfield™ à 10 et 100 tours par minute ont été répétées après 2 mois : on observe une variation des viscosités inférieure à 3 % des valeurs mesurées initialement, ce qui dénote une excellente stabilité dans le temps.

### Exemple 2

Cet exemple illustre la synthèse et l'utilisation de différents épaississants associatifs, selon l'invention (présence de polyglycérol au cours de la synthèse), ou hors invention (sans ajout de polyglycérol pendant la synthèse).

L'utilisation en question a lieu dans une formulation de peinture aqueuse dont la constitution est donnée dans le tableau 3, les chiffres indiquant la masse en gramme de chaque constituant.

**Tableau 3**

| | |
|---|---|
| Eau | 281,0 |
| Ammoniaque 31 % | 2,0 |
| Ecodis 40 (Coatex™) | 3,0 |
| Acticide MBS (Thor™) | 2,0 |
| Byk™ 34 (Byk™) | 1,0 |
| TiONA™ 568 (Cristal™) | 41,0 |
| Durcal 5 (Omya™) | 328,0 |
| Omyacoat™ 850 OG (Omya™) | 215,0 |
| Axilat™ DS 910 (Hexion™) | 82,0 |
| Butyl diglycol | 20,0 |
| Epaississant à tester | 24,0 * |

| | |
|---|---|
| * les 24 grammes correspondent à la masse d'une émulsion contenant 30 % en poids sec de polymère | |

### Essai n° 10

Cet essai illustre un épaississant HASE hors invention, polymérisé avec un tensio-actif classique.

Cet épaississant résulte de la synthèse de, exprimé en % en poids des monomères :
a) 33,7 % d'acide méthacrylique,
b) 59,4 % d'acrylate d'éthyle,
c) 6,9 % d'un monomère de formule (I) avec :
   R désignant la fonction méthacrylate
   q = 0, p = 25,
   R' désignant le groupement hydrophobe ramifié en 16 atomes de carbone.

Dans un réacteur de 1 litre on pèse 288 grammes d'eau bi permutée, 3,5 grammes de dodécyl sulfate de sodium et 11,5 g de tensio-actif non ionique qui est l'alcool isotridécylique condensé avec 3 molécules d'oxyde d'éthylène. On chauffe en pied de cuve à 72°C ± 2°C.

Pendant ce temps, on prépare une pré émulsion, en pesant dans un bêcher :
- 285 grammes d'eau bi permutée,
- 3,5 grammes de dodécyl sulfate de sodium,
- 102,06 grammes d'acide méthacrylique,
- 180 grammes d'acrylate d'éthyle,
- 21 grammes de macromonomère de formule (I),
- 0,64 g de dodécyl mercaptan.

La masse de tensio-actif non-ionique représente donc ici 3,6 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre la dispersion ainsi obtenue.

### Essai n° 11

Cet essai illustre un épaississant selon l'invention, polymérisé en présence du polyglycérol-3 commercialisé par la société Solvay™.

L'épaississant est celui de l'essai n° 10, polymérisé selon la technique décrite dans l'essai n° 10, à la différence qu'on a substitué, en masse, le tensio-actif non-ionique de polymérisation par le polyglycérol-3 de l'essai n° 5.

### Essai n° 12

Cet essai illustre un épaississant selon l'invention, polymérisé en présence du Chimexane™ NB.

L'épaississant est celui de l'essai n° 10, polymérisé selon la technique décrite dans l'essai n° 10, à la différence qu'on a substitué, en masse, le tensio-actif de polymérisation par le Chimexane™ NB.

### Essai n° 13

Cet essai illustre un épaississant HASE hors invention, polymérisé avec un tensio-actif classique.

Cet épaississant résulte de la synthèse de, exprimé en % en poids des monomères :
a) 35,57 % d'acide méthacrylique,
b) 52,43 % d'acrylate d'éthyle,
c) 12 % d'un monomère de formule (I) avec :
   R désignant la fonction méthacrylate,
   q = 0, p = 30,
   R' désignant le groupement hydrophobe constitué de 12 atomes de carbones et issu de l'éthoxylation d'un alcool oxo constitué de 12 atomes de carbones.

Dans un réacteur de 1 litre on pèse 485,4 grammes d'eau bi permutée et 6,66 grammes de dodécyl sulfate de sodium et 11,5 g d'un tensio-actif commercialisé par la société Clariant™ sous le nom de Polyglykol™ B11/150. On chauffe en pied de cuve à 72°C ± 2°C.

Pendant ce temps, on prépare une pré émulsion, en pesant dans un bécher :
- 149 grammes d'eau bi permutée,
- 0,33 grammes de dodécyl sulfate de sodium,
- 105,8 grammes d'acide méthacrylique,
- 155,9 grammes d'acrylate d'éthyle,
- 35,7 grammes de macromonomère de formule (I).

La masse de tensio-actif représente donc ici 3,87 % de la masse totale du polymère fabriqué.

On pèse ensuite 0,95 gramme de persulfate d'ammonium dilué dans 10 grammes d'eau bi permutée pour le premier catalyseur, et 0,095 gramme de métabisulfite de sodium dilué dans 10 grammes d'eau bi permutée pour le second catalyseur. Lorsque le pied de cuve est à température, on ajoute les 2 catalyseurs et on effectue la polymérisation pendant 2 heures à 76°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre le polymère ainsi obtenu.

### Essai n° 14

Cet essai illustre un épaississant selon l'invention, polymérisé en présence de polyglycérol-4 de la société Solvay™.

L'épaississant est celui de l'essai n° 13, polymérisé selon la technique décrite dans l'essai n° 13, à la différence qu'on a substitué, en masse, le tensio-actif non-ionique de polymérisation par du polyglycérol-4.

### Essai n° 15

Cet essai illustre un épaississant selon l'invention, polymérisé en présence du Chimexane™ NB commercialisé par la société Chimex™.

L'épaississant est celui de l'essai n° 13, polymérisé selon la technique décrite dans l'essai n° 13, à la différence qu'on a substitué, en masse, le tensio-actif non-ionique de polymérisation par le Chimexane™ NB.

Pour chacun des essais, on a déterminé les viscosités Brookfield™, à 25°C, à 10 et 100 tours / min, aux instants t = 1 jour (µ_{10 1J}, µ_{100 1J}) et t = 7 jours (µ_{10 7J}, µ_{100 7J}), l'instant t = 0 correspondant au moment de la fabrication de la peinture.

Les résultats apparaissent dans le tableau 4.

**Tableau 4**

| Essai n° | 10 | 11 | 12 |
|---|---|---|---|
| Hors Invention INvention | HI | IN | IN |
| µ_{10 1J} (mPa.s) | 7700 | 8500 | 8200 |
| µ_{100 1J} (mPa.s) | 2700 | 2900 | 3000 |
| µ_{10 7J} (mPa.s) | 8100 | 8600 | 8300 |
| µ_{100 7J} (mPa.s) | 3100 | 3000 | 3000 |
| Δµ₁₀ (%) | 5 | 1 | 1 |
| Δµ₁₀₀ (%) | 15 | 3 | 0 |
| | | | |

| Essai n° | 13 | 14 | 15 |
|---|---|---|---|
| Hors Invention INvention | HI | IN | IN |
| µ_{10 1J} (mPa.s) | 7300 | 7000 | 7100 |
| µ_{100 1J} (mPa.s) | 3000 | 2400 | 2500 |
| µ_{10 7J} (mPa.s) | 8700 | 7500 | 7600 |
| µ_{100 7J} (mPa.s) | 3300 | 2500 | 2600 |
| Δµ₁₀ (%) | 19 | 7 | 7 |
| Δµ₁₀₀ (%) | 10 | 4 | 4 |

Ces résultats démontrent que seuls les épaississants polymérisés en présence de polyglycérols selon l'invention, permettent de limiter l'évolution de la viscosité de la peinture au bout de 7 jours, les meilleurs résultats étant toujours obtenus selon la variante préférée de l'invention.

On pourra noter l'excellent résultat obtenu avec l'essai n° 12. Pour ce dernier essai, les mesures de viscosités Brookfield™ à 10 et 100 tours par minute ont été répétées après 1 mois : on observe une variation des viscosités inférieure à 5 % des valeurs mesurées initialement.

## Revendications

1. Emulsion aqueuse d'un épaississant associatif obtenu par polymérisation :
a) d'au moins un monomère qui est l'acide (méth)acrylique, préférentiellement l'acide méthacrylique,
b) d'au moins un monomère qui est un ester de l'acide (méth)acrylique, préférentiellement l'acrylate d'éthyle,
c) d'au moins un monomère possédant au moins un groupement hydrophobe,
le groupement hydrophobe du monomère contenant au moins un groupement hydrophobe comporte au moins 6 et au plus 36 atomes de carbone
**caractérisée en ce qu'**on met en oeuvre d) au moins un polyglycérol de formule (I) pendant ladite polymérisation : 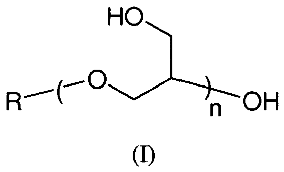 où R désigne l'hydrogène, un groupement ester fonctionnalisé par un groupe alkyle ayant de 8 à 22 atomes de carbone ou un groupement alkyle ayant de 8 à 22 atomes de carbone, et préférentiellement un groupement alkyle ayant de 8 à 22 atomes de carbone.

2. Emulsion selon la revendication 1 **caractérisée en ce que**, pour ledit épaississant associatif obtenu par polymérisation, ladite polymérisation consiste à réaliser une première étape d'introduction dans l'eau des composés d) et desdits tensio-actifs autres que les composés d), suivie d'une deuxième étape de montée en température du milieu, suivie d'une troisième étape d'introduction des initiateurs de polymérisation, puis des monomères éventuellement ajoutés en combinaison avec de l'eau et des tensio-actifs autres que les composés d).

3. Emulsion selon une des revendications 1 ou 2 **caractérisée en ce que**, pour ledit épaississant associatif obtenu par polymérisation, dans ladite polymérisation les tensio-actifs autres que les composés d) sont choisis parmi les tensio-actifs anioniques et préférentiellement parmi le dodécyl sulfate de sodium, le di octyl sulfosuccinate de sodium, le dodécyl benzène sulfonate de sodium, les tensio-actifs non ioniques et préférentiellement les éthers d'alcools gras et de polyoxyéthylèneglycol, les esters de polyoxyéthylèneglycol et les mélanges de ces tensio-actifs.

4. Emulsion selon une des revendications 1 à 3 **caractérisée en ce que**, pour ledit épaississant associatif obtenu par polymérisation, le % massique de tensio-actifs autres que d) / polymère est compris entre 1 % et 5 % dans ladite polymérisation.

5. Emulsion selon une des revendications 1 à 4 **caractérisée en ce que**, pour ledit épaississant associatif obtenu par polymérisation, ladite polymérisation met en oeuvre, en % en poids, par rapport au poids total dudit épaississant associatif :
a) de 20 % à 60 % en poids d'au moins un monomère qui est l'acide (méth)acrylique, préférentiellement l'acide méthacrylique,
b) de 40 % à 80 % d'au moins un monomère qui est un ester de l'acide (méth)acrylique, préférentiellement l'acrylate d'éthyle,
c) de 0,5 % à 25 % d'au moins un monomère possédant au moins un groupement hydrophobe,
d) de 0,1 % à 10 % en poids d'au moins un polyglycérol de formule (I), 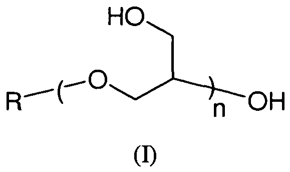 où R désigne l'hydrogène, ou un groupement ester fonctionnalisé par un groupe alkyle ayant de 8 à 22 atomes de carbone, ou un groupement alkyle ayant de 8 à 22 atomes de carbone, et préférentiellement un groupement alkyle ayant de 8 à 22 atomes de carbone, la somme des pourcentages a), b), c) et d) étant égale à 100 %.

6. Emulsion selon une des revendications 1 à 5 **caractérisée en ce que**, pour ledit épaississant associatif obtenu par polymérisation, le monomère contenant au moins un groupement hydrophobe possède la formule générale R - (OE)ₚ - (OP)_{q} - R', avec :
- p et q désignant des entiers inférieurs ou égaux à 150 dont l'un au moins est non nul, avec préférentiellement q = 0 et 0 < p < 80,
- OE et OP désignant respectivement l'oxyde d'éthylène et l'oxyde de propylène,
- R désignant une fonction polymérisable, et préférentiellement la fonction méthacrylate ou méthacryluréthane,
- R' désignant un groupement hydrophobe comportant au moins 6 et au plus 36 atomes de carbone.

7. Emulsion selon une des revendications 1 à 6 **caractérisée en ce que**, pour ledit polymère associatif obtenu par polymérisation, il présente une masse moléculaire moyenne en poids comprise entre 20 000 g/mol et 1 000 000 g/mol, telle que mesurée par GPC.

8. Utilisation d'une émulsion selon une des revendications 1 à 7, comme agent épaississant d'une formulation aqueuse ou d'un adhésif.

9. Utilisation selon la revendication 8, selon laquelle ladite formulation aqueuse est une peinture aqueuse, un crépi ou un enduit.

10. Formulation aqueuse ou adhésif contenant une émulsion selon une des revendications 1 à 7.

11. Formulation aqueuse selon la revendication 10, selon laquelle ladite formulation est une peinture aqueuse, un crépi ou un enduit.

12. Utilisation du polyglycérol de formule (I) comme monomère pour préparer par polymérisation un épaississant associatif sous forme d'émulsion aqueuse.

## Patentansprüche

1. Wässrige Emulsion eines Assoziativverdickers, erhalten durch Polymerisation von:
a) mindestens einem Monomer, das (Meth)acrylsäure, vorzugsweise Methacrylsäure ist,
b) mindestens einem Monomer, das ein Ester der (Meth)acrylsäure, vorzugsweise Ethylacrylat ist,
c) mindestens einem Monomer, das mindestens eine hydrophobe Gruppe besitzt,
wobei die hydrophobe Gruppe des Monomers, das mindestens eine hydrophobe Gruppe enthält, mindestens 6 und höchstens 36 Kohlenstoffatome umfasst,
**dadurch gekennzeichnet, dass** d) mindestens ein Polyglycerin mit der Formel (I) während der Polymerisation: 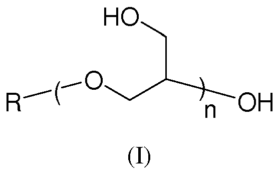 worin R für Wasserstoff steht, eine Estergruppe, die durch eine Alkylgruppe mit 8 bis 22 Kohlenstoffatomen funktionalisiert ist, oder eine Alkylgruppe mit 8 bis 22 Kohlenstoffatomen und vorzugsweise eine Alkylgruppe mit 8 bis 22 Kohlenstoffatomen umgesetzt wird.

2. Emulsion nach Anspruch 1, **dadurch gekennzeichnet, dass** für den Assoziativverdicker, der durch Polymerisation erhalten ist, die Polymerisation darin besteht, einen ersten Schritt des Einführens in das Wasser der Verbindungen d) und der anderen Tenside als die Verbindungen d) auszuführen, der von einem zweiten Schritt des Erhöhens der Temperatur des Mediums gefolgt ist, der von einem dritten Schritt des Einführens der Polymerisationsinitiatoren und dann der Monomere, die eventuell in Kombination mit Wasser und anderen Tensiden als die Verbindungen d) hinzugefügt werden, gefolgt ist.

3. Emulsion nach Anspruch 1 oder 2, **dadurch gekennzeichnet, dass** für den Assoziativverdicker, der durch Polymerisation erhalten ist, in der Polymerisation die anderen Tenside als die Verbindungen d) aus den anionischen Tensiden und vorzugsweise aus Natriumdodecylsulfat, Dioctylnatriumsulfosuccinat, Natriumdodecylbenzolsulfonat, den nichtionischen Tensiden und vorzugsweise den Ethern von Fettalkoholen und Polyoxyethylenglycol, den Estern von Polyoxyethylenglycol und den Mischungen dieser Tenside ausgewählt sind.

4. Emulsion nach einem der Ansprüche 1 bis 3, **dadurch gekennzeichnet, dass** für den Assoziativverdicker, der durch Polymerisation erhalten ist, das Massenprozent von den anderen Tensiden als d) / Polymer zwischen 1 % und 5 % in der Polymerisation beträgt.

5. Emulsion nach einem der Ansprüche 1 bis 4, **dadurch gekennzeichnet, dass** die Polymerisation für den Assoziativverdicker, der durch Polymerisation erhalten ist, in Gew.-% bezogen auf das Gesamtgewicht des assoziativen Verdickungsmittels Folgendes einsetzt:
a) von 20 bis 60 Gew.-% von mindestens einem Monomer, das (Meth)acrylsäure, vorzugsweise Methacrylsäure ist,
b) von 40 bis 80 Gew.-% von mindestens einem Monomer, das ein Ester der (Meth)acrylsäure, vorzugsweise Ethylacrylat ist,
c) von 0,5 bis 25 Gew.-% von mindestens einem Monomer, das mindestens eine hydrophobe Gruppe besitzt,
d) von 0,1 bis 10 Gew.-% von mindestens einem Polyglycerin mit der Formel (I), 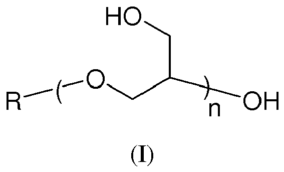 worin R für Wasserstoff steht, oder eine Estergruppe, die durch eine Alkylgruppe mit 8 bis 22 Kohlenstoffatomen funktionalisiert ist, oder eine Alkylgruppe mit 8 bis 22 Kohlenstoffatomen und vorzugsweise eine Alkylgruppe mit 8 bis 22 Kohlenstoffatomen, wobei die Summe aller Prozentwerte a), b), c) und d) gleich 100 % ist.

6. Emulsion nach einem der Ansprüche 1 bis 5, **dadurch gekennzeichnet, dass** für den Assoziativverdicker, der durch Polymerisation erhalten ist, das Monomer, das mindestens eine hydrophobe Gruppe enthält, die allgemeine Formel R - (OE)ₚ - (OP)_{q} - R' besitzt, worin:
- p und q für ganze Zahlen von weniger als oder gleich 150 stehen, von denen mindestens eine nicht Null ist, vorzugsweise mit q = 0 und 0 < p < 80,
- OE und OP jeweils für Ethylenoxid und Propylenoxid stehen,
- R für eine polymerisierbare Funktion und vorzugsweise die Methacrylat- oder Methacrylurethanfunktion steht,
- R' für eine hydrophobe Gruppe steht, die mindestens 6 und höchstens 36 Kohlenstoffatome umfasst.

7. Emulsion nach einem der Ansprüche 1 bis 6, **dadurch gekennzeichnet, dass** sie für den Assoziativverdicker, der durch Polymerisation erhalten ist, ein gewichtsgemitteltes Molekulargewicht zwischen 20.000 g/Mol bis 1.000.000 g/Mol, wie durch GPC gemessen, aufweist.

8. Verwendung einer Emulsion nach einem der Ansprüche 1 bis 7, als Verdickungsmittel einer wässrigen Formulierung oder eines Klebstoffs.

9. Verwendung nach Anspruch 8, wobei die wässrige Formulierung ein Lack auf Wasserbasis, ein Putz oder eine Beschichtung ist.

10. Wässrige Formulierung oder Klebstoff, die eine Emulsion nach einem der Ansprüche 1 bis 7 enthalten.

11. Wässrige Formulierung nach Anspruch 10, wobei die Formulierung ein Lack auf Wasserbasis, ein Putz oder eine Beschichtung ist.

12. Verwendung des Polyglycerins mit der Formel (I) als Monomer, um durch Polymerisation einen Assoziativverdicker in Form von wässriger Emulsion anzufertigen.

## Claims

1. Aqueous emulsion of an associative thickener obtained by polymerization:
a) of at least one monomer which is (meth)acrylic acid, preferentially methacrylic acid,
b) of at least one monomer which is an ester of (meth)acrylic acid, preferentially ethyl aciylate,
c) of at least one monomer having at least one hydrophobic group,
the hydrophobic group of the monomer containing at least one hydrophobic group has at least 6 and at most 36 carbon atoms
**characterized in that** d) at least one polyglycerol of formula (I) is used during the said polymerization : 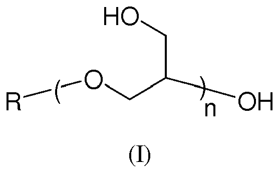 where R designates hydrogen, an ester group functionalised by an alkyl group having 8 to 22 carbon atoms or an alkyl group having 8 to 22 carbon atoms, and preferentially an alkyl group having 8 to 22 carbon atoms.

2. Emulsion according to claim 1 **characterized in that**, for the said associative thickener obtained by polymerization, the said polymerization consists in accomplishing a first step of introducing into water compounds d) and the said surfactants other than the compounds d), followed by a second step of increasing the temperature of the medium, followed by a third step of introducing polymerization initiators, and then monomers possibly added in combination with water and surfactants other than compounds d).

3. Emulsion according to one of the claims 1 or 2 **characterized in that**, for the said associative thickener obtained by polymerization, in the said polymerization the surfactants other than compounds d) are chosen from among the anionic surfactants and preferentially from among sodium dodecyl sulphate, dioctyl sodium sulfosuccinate, sodium dodecyl benzene sulfonate, the non-ionic surfactants and preferentially the ethers of fatty alcohols and of polyoxyethyleneglycol, the esters of polyoxyethyleneglycol and the blends of these surfactants.

4. Emulsion according to one of the claims 1 to 3 **characterized in that**, for the said associative thickener obtained by polymerization, the mass % of surfactants other than d) / polymer is between 1% and 5% in the said polymerization.

5. Emulsion according to one of the claims 1 to 4 **characterized in that**, for the said associative thickener obtained by polymerization, the said polymerization uses, as a % by weight, relative to the total weight of the said associative thickener:
a) from 20% to 60% by weight of at least one monomer which is (meth)acrylic acid, preferentially methacrylic acid,
b) from 40% to 80% of at least one monomer which is an ester of (meth)acrylic acid, preferentially ethyl acrylate,
c) from 0.5% to 25% of at least one monomer having at least one hydrophobic group,
d) from 0.1% to 10% by weight of at least one polyglycerol of formula (I), 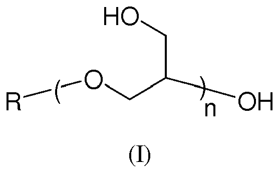 where R designates hydrogen, or an ester group functionalized by the alkyl group having 8 to 22 carbon atoms, or an alkyl group having 8 to 22 carbon atoms, and preferentially an alkyl group having 8 to 22 carbon atoms, the sum of the percentages a), b), c) and d) is equal to 100%.

6. Emulsion according to one of the claims 1 to 5 **characterized in that**, for the said associative thickener obtained by polymerization, the monomer containing at least one hydrophobic group has the general formula R - (EO)ₚ - (PO)_{q} - R', with:
- p and q designate integers of less than or equal to 150, at least one of which is non-zero, with preferentially q = 0 and 0 < p < 80,
- EO and PO designate respectively ethylene oxide and propylene oxide,
- R designates a polymerizable group, and preferentially the methacrylate or methacrylurethane group,
- R' designates a hydrophobic group having at least 6 and at most 36 carbon atoms.

7. Emulsion according to one of the claims 1 to 6 **characterized in that**, for the said associative polymer obtained by polymerization, it has an average molecular mass by weight of between 20,000 g/mol and 1,000,000 g/mol, as measured by GPC.

8. Use of an emulsion according to one of the claims 1 to 7, as thickening agent of an aqueous formulation or an adhesive.

9. Use according to claim 8, according to which the said aqueous formulation is a water-based paint, a render coating or a putty.

10. Aqueous formulation or adhesive containing an emulsion according to one of the claims 1 to 7.

11. Aqueous formulation according to claim 10, according to which the said formulation is a water-based paint, a render coating or a putty.

12. Use of the polyglycerol of formula (I) as monomer to prepare by polymerization an associative thickener in the form of aqueous emulsion.
